# EUROPÄISCHE PATENTSCHRIFT

(11) **EP 3 479 008 B1**
(45) Veröffentlichungstag und Bekanntmachung des Hinweises auf die Patenterteilung: **22.05.2024**
(21) Anmeldenummer: 17734641.8
(22) Anmeldetag: 28.06.2017
(51) Int. Cl.: F17C 13/04

(54) **TANKVENTIL**
TANK VALVE
SOUPAPE DE RÉSERVOIR

(30) Priorität: 01.07.2016 DE 102016008442
(43) Veröffentlichungstag der Anmeldung: 08.05.2019
(73) Patentinhaber: cellcentric GmbH & Co. KG, 73230 Kirchheim unter Teck (DE)
(72) Erfinder: ALBERT, Simone, 73272 Neidlingen (DE); GALL, Fabian, 72461 Albstadt (DE); HAUSMANN, Philipp, 73230 Kirchheim (DE)
(74) Vertreter: Wallinger Ricker Schlotter Tostmann
(86) Internationale Anmeldenummer: PCT/EP2017/000767
(87) Internationale Veröffentlichungsnummer: WO 2018/001561

(56) Entgegenhaltungen:
- EP-A1- 0 496 091
- DE-A1- 10 362 052
- DE-T2- 69 822 006
- JP-A- 2013 053 659
- JP-A- 2014 001 772
- US-A1- 2008 289 700
- US-B2- 9 371 913

## Beschreibung

Die Erfindung betrifft ein Tankventil nach der im Oberbegriff von Anspruch 1 näher definierten Art. Außerdem betrifft die Erfindung die Verwendung eines derartigen Tankventils.

Ein Tankventil zur Montage an einem Druckgasbehälter ist aus dem allgemeinen Stand der Technik bekannt. Ein solches Tankventil wird auch häufig mit dem englischen Begriff On-Tank-Valve bzw. seiner Abkürzung OTV bezeichnet. Das Tankventil ist dabei ein Aufbau mit einem Grundkörper, welcher zumindest zwei Abschnitte aufweist, wobei ein erster Grundkörperabschnitt im montierten Zustand in den Druckgasbehälter ragt und dichtend mit diesem verbunden ist. Typischerweise ist dieser erste Grundkörperabschnitt über ein Außengewinde in ein Innengewinde einer korrespondierenden Aufnahme des Druckgasbehälters eingeschraubt. Neben diesem im montiertem Zustand innerhalb des Druckgasbehälters bzw. seines Anschlussgewindes liegenden ersten Grundkörperabschnitt hat der Grundkörper typischerweise einen zweiten Grundkörperabschnitt, welcher sich im montiertem Zustand außerhalb des Druckgasbehälters befindet. Einer oder typischerweise beide der Grundkörperabschnitte weisen nun sogenannte Funktionsuntergruppen auf, welche zur Realisierung der Funktionalität des Tankventils notwendig sind. Derartige Funktionsuntergruppen können beispielsweise ein Entnahmeventil, ein Rückschlagventil in einer Betankungsleitung, ein Sicherheitsventil, ein (manuelles) Absperrventil, ein Filter, ein Gasanschluss für eine Betankungs- und/oder Entnahmeleitung oder Ähnliches sein.

Beispielhaft soll hinsichtlich eines derartigen Tankventils auf die gattungsgemäße JP 2009-168165 A hingewiesen werden, welche ein solches unter der Bezeichnung Hochdruckventil zeigt. Bei dem gattungsgemäßen Hochdruckventil ist es dabei so, dass dieses über einen gemeinsamen Gasanschluss verfügt, welcher sowohl zur Betankung als auch zur Entnahme von Gas dient. Er verzweigt sich im Inneren eines Grundkörpers des Tankventils in eine Betankungsleitung mit einem ersten größeren Querschnitt und einem Rückschlagventil einerseits und in eine Entnahmeleitung mit kleinerem Querschnitt und einem Pilotventil andererseits. Der Aufbau zeigt außerdem zwei Filter zum Herausfiltern von Verunreinigungen aus dem strömenden Gas, wobei einer der Filter zwischen dem Pilotventil und dem Inneren des Druckgasbehälters in der Entnahmeleitung und der andere Filter in der Betankungsleitung eingesetzt ist. Dieser Aufbau ist entsprechend aufwändig in der Herstellung, da das Einbringen von verschiedenen Leitungselementen mit unterschiedlichen Durchmessern beim Bohren der Leitungselemente in den Grundkörper jeweils ein Umrüsten der Bohrwerkzeuge erforderlich macht. Hierdurch steigen die Rüstzeiten und die Herstellungskosten für das Tankventil. Insbesondere beim Einsatz in Fahrzeugen stellt dies einen nicht unerheblichen Nachteil dar.

Weitere Ventile sind beispielsweise aus der US 2009/0146094 A1 oder in der Ausgestaltung als Pilotventil auch aus der EP 1 682 801 B1 bekannt.

Aus dem Dokument EP 0 496 091 A1 ist ein Ventil für Druck- oder Flüssiggasflaschen mit einer auf einer Gasflasche aufschraubbaren Armatur, einem inneren Absperrorgan, das eine Abdichtfläche an der Kreuzungsstelle eines Gasaustrittskanals und einen mit einem Gaseintritt in Verbindung stehendem Kanal aufweist bekannt, mit einem äußeren Bedienungsorgan, das durch die Armatur mit dem Absperrorgan verbunden ist um dieses gegen die Wirkung elastischer Mitteln zwischen einer Öffnungs- und einer Schließstellung zu bewegen und einem Druckminderventil um bei geöffnetem Absperrorgan den Gasabflussdruck zu regeln.

Aus dem Dokument JP 2013 053659 A ist ein Hochdruck-Gasfüll- und -Ausgabesystem zum Befüllen eines Tanks mit Hochdruckgas und zum Ausgeben des in den Tank eingefüllten Hochdruckgases bekannt.

Aus dem Dokument JP 2014 001 772 A ist ein Hochdruck-Gasfüll-Ausgabesystem, das in der Lage sein soll, Hochdruck-Gas in einen Tank zu füllen und das in den Tank gefüllte Hochdruck-Gas auszugeben bekannt.

Aus dem Dokument US 2008/0289700 A1 sind Sicherheitsventile bekannt, die in Verbindung mit Druckgas- oder Fluidzylindern, Tanks oder ähnlichen Einheiten verwendet werden.

Die Aufgabe der hier vorliegenden Erfindung besteht nun darin, den genannten Nachteil zu vermeiden und ein sicher funktionierendes Tankventil anzugeben.

Erfindungsgemäß wird diese Aufgabe durch ein Tankventil mit den Merkmalen im kennzeichnenden Teil des Anspruchs 1 gelöst. Vorteilhafte Ausgestaltungen und Weiterbildungen ergeben sich aus den hiervon abhängigen Unteransprüchen. Im Anspruch 15 ist außerdem eine besonders bevorzugte Verwendung eines derartigen Tankventils angegeben.

Das erfindungsgemäße Tankventil weist, ähnlich wie das Tankventil gemäß dem gattungsgemäßen Stand der Technik, einen Grundkörper und mit einem Entnahmeventil, insbesondere einem Pilotventil, in dem Entnahmepfad auf. Erfindungsgemäß ist es so, dass in dem Entnahmepfad in Reihe zu dem Entnahmeventil ein Rückschlagventil angeordnet ist, welches den Durchfluss entgegen der Strömungsrichtung bei der Entnahme von Gas sperrt. Dies bedeutet, dass das Rückschlagventil so angeordnet ist, dass es eine Durchströmung des Entnahmepfads beim Betanken verhindert. Das Rückschlagventil dient also dazu, dass sowohl bei der Betankung durch die Betankungsleitung, die typischerweise ein sich bei der Betankung öffnendes Rückschlagventil aufweist, der Strömungsweg durch die Betankungsleitung als auch bei der Entnahme der Strömungsweg durch die Entnahmeleitung selbsttätig ausgewählt wird.

Ohne das erfindungsgemäße Rückschlagventil könnte sich bei der Betankung der Druck des Gases auch im Entnahmepfad fortpflanzen, insbesondere begünstigt, wenn beiden Leitungen durch den vergleichbaren Strömungsquerschnitt vergleichbare Verhältnisse hinsichtlich der Durchströmung und der Druckverluste bereitstellen. Da nun ein Entnahmeventil, insbesondere wenn dieses als Pilotventil aufgebaut ist, einer entsprechend hohen Druckdifferenz, wie sie beim Betanken typischerweise auftritt, im Allgemeinen nicht standhält sondern von einer solch hohen Druckdifferenz zumindest zeitweise aufgedrückt wird, könnte Gas auf diesem Weg in das Innere des Druckgasbehälters strömen. Das Gas könnte dabei durch den typischerweise hohen Volumenstrom und die hohe Strömungsgeschwindigkeit gegebenenfalls zu einer Beeinträchtigung der späteren Funktion des Entnahmeventils führen. Dies kann durch das erfindungsgemäße Rückschlagventil, welches ebenfalls in der Richtung entgegen seiner gewünschten Durchströmung durch ein Federelement unterstützt werden kann, verhindert werden.

Darüber hinaus würde ein Einströmen des Gases bei der Betankung durch die Entnahmeleitung zu einem Gasaustritt im Bereich des Entnahmepfads führen. Dies kann unter Umständen unerwünscht sein, da typischerweise in dem Bereich, in dem die Entnahmeleitung in dem Grundkörper endet, ein Temperatursensor angeordnet ist, welcher dann von dem Gas direkt angeströmt wird und somit fehlerhafte Temperaturwerte liefert, da das Gas bei der direkten Anströmung anders temperiert ist, als wenn das Gas sich in dem Inneren des Druckgasbehälters entsprechend vermischt hat.

An der Mündung der Betankungsleitung in dem Druckgasbehälter ist ein Rohrabschnitt angeordnet, welcher eine größere axiale Länge aufweist, als ein an dem Grundkörper angeordneter Temperatursensor, und welcher gegenüber einer zentralen Achse des Druckgasbehälters in dem Druckgasbehälter eingeschraubten Tankventils abgewinkelt oder gebogen ist. Ein solcher Rohrabschnitt unterstützt bei der Betankung, dass das Gas nicht unmittelbar in den Bereich des Temperatursensors strömt, was zu den oben beschriebenen Nachteilen führen würde, sondern dass dieses zuerst in den Druckgasbehälter einströmt und dann mit dem bereits im Inneren des Druckgasbehälters befindlichen Gas gemischt wird. So kann die in dem Druckgasbehälter tatsächlich vorliegende Temperatur mit dem Temperatursensor zuverlässiger gemessen werden.

Ferner ist in der Entnahmeleitung eine Rohrbruchsicherung vorgesehen, welche eine Durchströmung der Entnahmeleitung in Entnahmerichtung verhindert, wenn der Gegendruck auf der dem Inneren des Druckgasbehälters abgewandten Seite der Rohrbruchsicherung unter einen Grenzwert abfällt. Eine solche Rohrbruchsicherung verschließt die Entnahmeleitung für den Fall, dass auf der dem Druckgasbehälter abgewandten Seite der Rohrbruchsicherung in der Entnahmeleitung der Druck stark abfällt oder sich kein Gegendruck mehr aufbaut. In diesem Fall wird von einem Defekt der Entnahmeleitung oder von sich an die Entnahmeleitung anschließenden Komponenten ausgegangen und die Rohrbruchsicherung verschließt selbststätig die Entnahmeleitung, sodass über den Defekt bzw. die Leckage, beispielsweise ein durch einen Unfall abgerissenes Rohr oder dergleichen, kein Gas aus dem Druckgasbehälter unkontrolliert abströmt.

Ferner ist vorgesehen, dass ein Ventilkörper des Rückschlagventils in der Entnahmeleitung und/oder ein Ventilkörper der Rohrbruchsicherung mit einem Federelement von einem Ventilsitz abgehoben ist. Das Rückschlagventil in der Entnahmeleitung oder die Rohrbruchsicherung oder besonders bevorzugt beide weisen also einen Aufbau mit einem Ventilkörper und einem Ventilsitz auf, wobei über jeweils ein Federelement der Ventilkörper im normalen Betrieb vom Ventilsitz abgehoben ist. Kommt es bei dem Rückschlagventil in der Entnahmeleitung beispielsweise während der Betankung des Druckgasbehälters zu einem Verschließen desselben, dann wirkt der in der Entnahmeleitung anstehende Druck entgegen der Kraft der Feder und verschließt das Rückschlagventil. Bei dem vergleichbar nur in anderer Wirkungsrichtung eingebauten Aufbau der Rohrbruchsicherung ist es so, dass bei einem ausgeglichenen oder leicht unterschiedlichen Druck der Ventilkörper über die Feder beabstandet vom Ventilsitz gehalten wird. Fällt der Druck auf der dem Druckgasbehälter abgewandten Seite des Ventilsitzes entsprechend ab, dann entfällt die durch den Druck gegen das Federelement aufgebaute Kraft, sodass das Federelement unterstützt durch den Druck im Druckgasbehälter den Ventilkörper gegen den Ventilsitz drückt und damit die Rohrbruchsicherung verschließt. Das Abströmen von Gas in den beispielsweise durch eine Leckage oder ein abgebrochenes oder abgerissenes Rohr geschädigten Bereich wird somit automatisch verhindert.

Ferner ist vorgesehen, dass die Ventilkörper der Rohrbruchsicherung und des Rückschlagventils in der Entnahmeleitung als ein Bauteil ausgeführt sind. Ein solches Bauteil als gemeinsamer Baukörper kann ein längliches Bauteil mit halbkugelförmigen Enden als Baukörper sein, welches beispielsweise über angebrachte oder einteilig mit ihm ausgeführte Rippen in einem Leitungselement geführt ist. Selbstverständlich ist es ebenso denkbar, die Rippen im Bereich des Leitungselements anzubringen, sodass der gemeinsame Ventilkörper lediglich aus einem zylindrischen Bauteil mit den bereits angesprochenen beispielsweise halbkugelförmig oder auch kegelstumpfförmig ausgeführten Enden besteht. Ein solcher gemeinsamer Baukörper kann dann über zwei Federelemente sowohl in der einen als auch in der anderen Richtung abgestützt werden und kann so mit einem einzigen Bauteil und den zwei Federelementen die Funktionalität sowohl des Rückschlagventils in der Entnahmeleitung als auch der Rohrbruchsicherung übernehmen. Die Ventilsitze können dabei beispielsweise als kegelförmige Ventilsitze an den beiden Enden des den gemeinsamen Ventilkörper aufnehmenden Leitungselements ausgebildet sein.

Gemäß einer sehr vorteilhaften Weiterbildung des erfindungsgemäßen Tankventils kann es dabei vorgesehen sein, dass das Rückschlagventil in der Entnahmeleitung und die Rohrbruchsicherung aus den gleichen Bauteilen in umgekehrter Einbaurichtung ausgebildet sind. Dieser Einsatz von gleichartigen Bauteilen ermöglicht insbesondere bei höheren Stückzahlen Skaleneffekte, sodass die Kosten für jedes einzelne Bauteil entsprechend abgesenkt werden können. Ergänzend zum Aufbau des Rückschlagventils in der Entnahmeleitung und der Rohrbruchsicherung über Gleichteile kann auch das an sich bekannte Rückschlagventil in der Betankungsleitung über die gleichen Bauteile mit aufgebaut werden, um so den Skaleneffekt noch größer zu machen und damit eine noch größere Kosteneinsparung zu erzielen.

Gemäß einer vorteilhaften Ausgestaltung dieser Idee ist es dabei ferner vorgesehen, dass der Ventilkörper und oder der Ventilsitz der Rohrbruchsicherung einen Strömungskanal mit definiertem Querschnitt aufweist, welcher die Hochdruckseite auch im geschlossenen Zustand mit der Niederdruckseite verbindet. Ein solcher Strömungskanal, welcher beispielsweise in dem Ventilkörper oder auch in dem Ventilsitz vorgesehen sein kann, soll dabei gemäß einer vorteilhaften Weiterbildung einen kleinen durchströmbaren Querschnitt, beispielsweise für Anwendungen an einem Wasserstofftank bei einem Nenndruck von 70 MPa einen durchströmbaren Querschnitt in der Größenordnung vom 50 bis 300 µm, vorzugsweise ca. 200 µm, aufweisen. Er erlaubt einen Druckausgleich zwischen der Hochdruckseite und der Niederdruckseite über einen längeren Zeitraum des Betriebs hinweg. Hat die Rohrbruchsicherung fehlerhaft angesprochen, beispielsweise aufgrund von Druckschwankungen im Bereich der Gasabfuhr aus der Entnahmeleitung, dann kann über einen solchen Strömungskanal als eine Art Reset-Bohrung ein Druckausgleich stattfinden, sodass die Rohrbruchsicherung in diesem Fall nach einer gewissen Betriebsdauer selbsttätig wieder öffnet und somit keine Wartung notwendig ist, um die gewünschte Funktionalität wieder herzustellen. Beim Einsatz von Gleichteilen in der oben beschriebenen Art und Weise würden sich dann der Ventilkörper und/oder der Ventilsitz der Rohrbruchsicherung geringfügig unterscheiden, beispielsweise indem nachträglich ein derartiger Strömungskanal eingebracht ist. Der Strömungskanal kann dabei gemäß einer vorteilhaften Weiterbildung der Idee als Bohrung oder in einer ergänzenden oder alternativen Ausführungsvariante auch als gerade oder spiralförmig umlaufende Nut jeweils in dem Ventilkörper und/oder dem Ventilsitz ausgebildet sein.

Gemäß einer sehr günstigen Weiterbildung des Strömungskanals kann es deshalb auch vorgesehen sein, dass dieser durch die ohnehin vorhandene Leckage eines Gewindes ausgebildet ist. Beispielsweise dann, wenn die Bauteile oder insbesondere der Ventilsitz über eine Hülse in einem Gegenelement verschraubt wird, dann wird, wenn keine speziellen Maßnahmen zur Abdichtung des Gewindes vorgesehen werden, über das Gewinde eine unvermeidliche Leckage auftreten. Wird also insbesondere auf ein Gewindedichtmittel bzw. Gewindekleber verzichtet, tritt zwischen den Partnern des Gewindes eine minimale Leckage auf. Diese ist als Strömungskanal in dem oben beschriebenen Sinn ausreichend, sodass beispielweise durch das einfache Weglassen eines Dichtmittels zwischen den Gewindepartnern ein Aufbau mit dem gewünschten Strömungskanal erzielt werden kann. Der weitere Vorteil ist der, dass hierfür dann keine unterschiedlichen Bauteile notwendig sind, sodass das eingangs beschriebene Gleichteilekonzept auch bei vorhandenem Strömungskanal leicht aufrechterhalten werden kann.

Eine weitere sehr vorteilhafte Ausführungsvariante des erfindungsgemäßen Tankventils sieht es vor, dass der Entnahmepfad ferner einen Filter aufweist, welcher zwischen dem Entnahmeventil einerseits und dem Rückschlagventil sowie der Rohrbruchsicherung andererseits angeordnet ist. Die Anordnung eines Filters in dem Entnahmepfad zwischen dem Rückschlagventil und der Rohrbruchsicherung einerseits und dem Entnahmeventil andererseits stellt sicher, dass Teilchen, welche beispielsweise bei der Betätigung des Rückschlagventils oder des Entnahmeventils anfallen, beispielsweise wenn solche vom Ventilsitz oder Ventilkörper des jeweiligen Ventils abgetragen werden, nicht in das hochempfindliche Entnahmeventil gelangen. Der Aufbau wird dadurch sehr sicher und zuverlässig, insbesondere dann, wenn auf der in Strömungsrichtung gegenüberliegenden Seite des Entnahmeventils, beispielsweise zwischen dem Entnahmeventil und einem Gasanaschluss in der Entnahmeleitung, ein weiterer Filter angeordnet ist, um das Entnahmeventil auch vor Verunreinigungen, welche bei der Betankung eingetragen werden könnten, zu schützen.

Eine sehr vorteilhafte Ausgestaltung dieser Idee sieht es nun ferner vor, dass der Filter, die Rohrbruchsicherung und das Rückschlagventil zu einem Bauteil montiert sind. Ein solches Bauteil, welches auch als Zusammenbaufilter bezeichnet werden könnte, kann also den Filter sowie die beiden Ventile umfassen. Insbesondere kann bei der Montage der einzelnen Bauteile durch Verschrauben ein ohnehin benötigtes Gewinde vorgesehen sein, um in der oben beschriebenen besonders günstigen Ausgestaltung den Strömungskanal für den Druckausgleich über einen längeren Zeitraum des Betriebs hinweg auszubilden.

Eine weitere sehr günstige Ausgestaltung dieser Idee sieht es dabei ferner vor, dass das Bauteil, also der Zusammenbaufilter, sich in dem Entnahmepfad in Richtung des Inneren des Druckgasbehälters an die Entnahmeleitung anschließt. Der Aufbau aus dem Rückschlagventil, der Rohrbruchsicherung und dem Filter kann also an das druckgasbehälterseitige Ende der Entnahmeleitung anmontiert werden und würde nach der Montage des Tankventils so in das Innere des Druckgasbehälters ragen. Je nach Länge des Aufbaus dieses Bauteils wird damit eine Anströmung des Temperatursensors mit Gas durch dieses Bauteil einerseits verhindert und andererseits wird wertvoller Bauraum im Inneren des Grundkörpers des Tankventils eingespart. Darüber hinaus ist die Integration insbesondere der Rohrbruchsicherung als sicherheitskritisches Bauteil in das stark geschützte Innere des Druckgasbehälters von Vorteil.

Gemäß einer vorteilhaften Ausgestaltung des erfindungsgemäßen Tankventils kann es darüber hinaus vorgesehen sein, dass die Entnahmeleitung und die Befüllleitung in etwa denselben Strömungsquerschnitt bzw. durchströmbaren Nenndurchmesser aufweisen. Die Leitungselemente, welche typischerweise durch gebohrte Kanäle innerhalb des Grundkörpers des Tankventils ausgebildet werden, weisen also denselben Querschnitt auf. Hierdurch wird der Fertigungsprozess des Tankventils vereinfacht und eine gleichmäßige Durchströmung der beiden Leitungen wird gewähreistet. Sich eventuell in den Leitungen befindliche Partikel werden durch die Leitungen bewegt und sammeln sich im Fall der Betankungsleitung in dem Inneren des Druckgasbehälters.

Der entscheidende Vorteil des erfindungsgemäßen Tankventils liegt in der sehr sicheren, einfachen Funktionalität. Dies wirkt sich insbesondere bei Fahrzeuganwendungen entsprechend vorteilhaft aus. Deshalb ist eine Verwendung des Tankventils gemäß Anspruch 11 an einem Druckgasbehälter zur Speicherung von Wasserstoff oder Erdgas, und hier insbesondere bei einem Nenndruck von mehr als 65 MPa, als Brennstoff in einem Fahrzeug vorgesehen.

Weitere vorteilhafte Ausgestaltungen des erfindungsgemäßen Tankventils sowie seiner Verwendung ergeben sich außerdem aus den weiteren abhängigen Unteransprüchen sowie aus dem Ausführungsbeispiel, welches nachfolgend unter Bezugnahme auf die Figuren näher beschrieben ist.

Dabei zeigen:
- Fig. 1: ein prinzipmäßig dargestelltes Fahrzeug mit einem Speichersystem für komprimiertes Gas als Brennstoff;
- Fig. 2: eine dreidimensionale Darstellung einer möglichen Ausführungsform eines Tankventils gemäß der Erfindung;
- Fig. 3: eine schematische Darstellung einer möglichen Anordnung gemäß der Erfindung in einem pneumatischen Fließbild;
- Fig. 4: eine Schnittdarstellung eines möglichen Aufbaus von Rückschlagventil, Rohrbruchsicherung und Filter;
- Fig. 5: eine prinzipmäßige Schnittdarstellung durch eine kombinierte Ausführung von Rohrbruchsicherung und Rückschlagventil; und
- Fig. 6: eine prinzipmäßige Schnittdarstellung gemäß der Linie VI-VI in Figur 5.

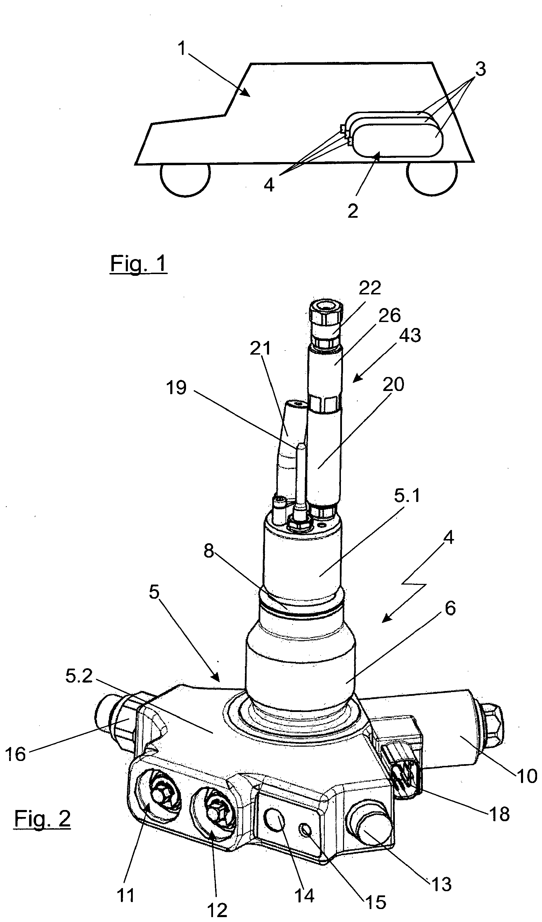

In der Darstellung der Figur 1 ist rein beispielhaft ein Fahrzeug 1 angedeutet. Dieses soll mit einem gasförmigen Brennstoff, beispielsweise mit komprimiertem Erdgas oder komprimiertem Wasserstoff, angetrieben werden. Der Brennstoff kann dazu in einem Verbrennungsmotor oder insbesondere bei der Verwendung von Wasserstoff vorzugsweise auch in einem Brennstoffzellensystem in die für den Antrieb genutzte Leistung umgesetzt werden. Zur Speicherung des komprimierten Gases ist in dem Fahrzeug 1 eine in ihrer Gesamtheit mit 2 bezeichnete Speichervorrichtung vorhanden. Diese besteht aus mehreren einzelnen Druckgasbehältern 3, von denen jeder ein Tankventil 4 trägt. Dieses Tankventil 4 wird auch als On-Tank-Valve oder abgekürzt als OTV bezeichnet. Die einzelnen Druckgasbehälter 3 können dabei zusammen mit ihren Tankventilen 4 beispielsweise so wie es aus dem eingangs erwähnten Stand der Technik bekannt ist, über eine gemeinsame Leitung miteinander verbunden sein, sodass Gas aus der Speichervorrichtung 2 in dem Fahrzeug genutzt werden kann. Insbesondere bei der Speicherung von Wasserstoff, beispielsweise für die bevorzugte Anwendung in einem Brennstoffzellensystem, liegt dabei der Nenndruck bei derartigen Druckgasbehältern 3 mit ihren Tankventilen 4 typischerweise in der Größenordnung von 70 MPa. Neben den Sicherheitsanforderungen an die einzelnen Druckgasbehälter 3 sowie ihre Tankventile 4 müssen außerdem hohe Anforderungen hinsichtlich der Dichtheit aber auch hinsichtlich der Möglichkeit, diese sicher, zuverlässig und kostengünstig herzustellen, gestellt werden.

In der Darstellung der Figur 2 ist eine dreidimensionale Darstellung eines Tankventils 4 zu erkennen. Das Tankventil 4 umfasst dabei einen Grundkörper 5, welcher im Wesentlichen aus zwei Abschnitten besteht. Ein erster Grundkörperabschnitt 5.1 ist so ausgebildet, dass er im späteren montierten Zustand des Tankventils 4 in den jeweiligen Druckgasbehälter 3 ragt. Er weist dafür in dem hier dargestellten Ausführungsbeispiel ein mit 6 bezeichnetes Gewinde auf, welches mit einem entsprechenden Gewinde in einem Aufnahmeelement, welches nicht dargestellt ist, des Druckgasbehälters 3 zusammenwirkt. Dieser erste Grundkörperabschnitt 5.1 weist außerdem eine in der Darstellung der Figur 2 angedeutete Dichteinrichtung 8 beispielsweise aus einem oder mehreren Dichtringen und/oder Stützringen auf. Ein zweiter Grundkörperabschnitt 5.2 ist in der Darstellung der Figur 2 im unteren Bereich des Tankventils 4 zu erkennen. Dieser zweite Grundkörperabschnitt 5.2 befindet sich nach der Montage des Tankventils 4 außerhalb des Druckgasbehälters 3. Der zweite Grundkörperabschnitt 5.2 weist dabei mehrere sogenannte Funktionsuntergruppen des Tankventils 4 auf. Die Funktionsuntergruppen im zweiten Grundkörperabschnitt 5.2 umfassen dabei ein elektromagnetisch betätigtes Pilotventil 9 als Entnahmeventil zur Entnahme von Gas aus dem Druckgasbehälter 3. Es wird über eine mit 10 bezeichnete elektromagnetische Spule betätigt. Hinsichtlich der Funktionalität eines solchen Pilotventils kann beispielhaft auf die Ausführungen in der DE 10 2013 019 978 A1 der Anmelderin hingewiesen werden.

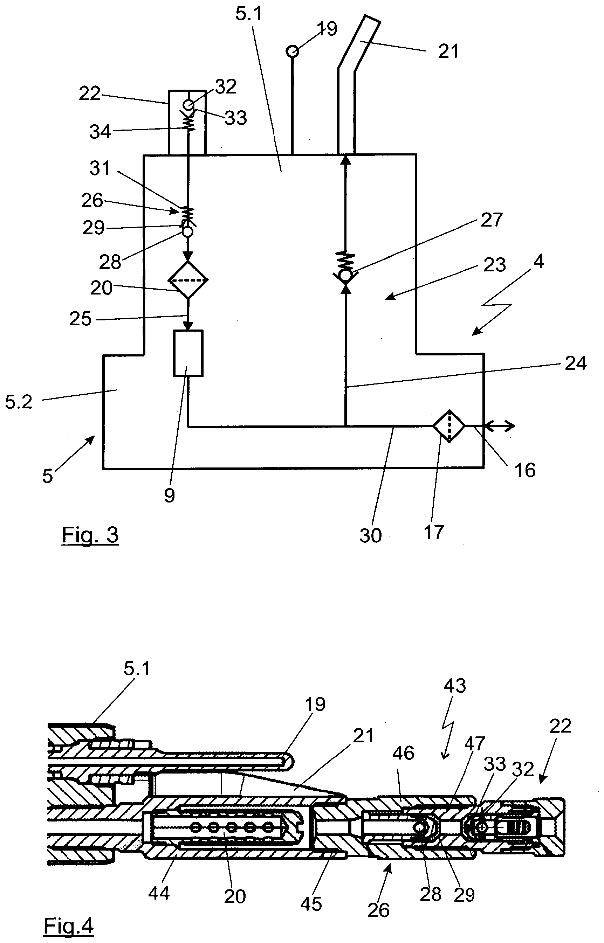

In der Darstellung der Figur 2 sind weitere in den zweiten Grundkörperabschnitt 5.2 integrierte Funktionsuntergruppen zu erkennen. Diese sind beispielsweise zwei parallel zueinander angeordnete manuelle Ventile 11, 12, wobei das manuelle Ventil 11 als manuelles Absperrventil 11 ausgebildet und das manuelle Ventil 12 als manuelles Entleerventil 12 ausgestaltet ist. Hierauf wird unten noch im Detail eingegangen. Als weitere Funktionsuntergruppe in dem zweiten Grundkörperabschnitt 5.2 ist außerdem der Teil eines thermisch auslösenden Sicherheitsventils 13 zu erkennen. Solche thermisch auslösenden Sicherheitsventile sind prinzipiell aus dem allgemeinen Stand der Technik bekannt. In einer üblichen Ausführungsform wird hier eine Schraube eingesetzt, welche eine zentrale Bohrung aufweist, In der zentralen Bohrung befindet sich ein Lot oder ein über ein Lot festgehaltener Sperrkörper. Erhitzt sich der Bereich des Tankventils 4 bzw. des thermisch auslösenden Sicherheitsventils 13 über die Schmelztemperatur des Lots hinaus, dann wird die Durchgangsbohrung in der Schraube freigegeben und das mit der Schraube in dauerhafter Verbindung stehende Gas im Inneren des Druckgasbehälters 13 kann abströmen. Eine Alternative hierzu, welche insbesondere im europäischen und amerikanischen Markt sehr häufig eingesetzt wird, besteht in einem Aufbau, bei welchem ein Ventilkörper von einer Glasampulle mit einer leicht siedenden Flüssigkeit in Position gehalten wird. Der Siedepunkt der Flüssigkeit in der Glasampulle ist so abgestimmt, dass diese bei einer kritischen Temperatur des thermisch auslösenden Sicherheitsventils 13 beginnt zu sieden. Durch die Volumenzunahme beim Sieden wird die Glasampulle zerstört und gibt den Ventilkörper gegenüber dem Ventilsitz frei. Durch den Druck des Gases in dem Druckgasbehälter, welcher an dem Ventilkörper ansteht, wird dieser in eine geöffnete Position, weg von dem Ventilsitz, bewegt, sodass das Gas aus dem Druckgasbehälter 3 abströmen kann. Hierfür dient in der Darstellung der Figuren 2 und 4 eine mit 14 bezeichnete Abblasleitung, welche bei einem Ansprechen des thermisch auslösenden Sicherheitsventils 13 mit dem Inneren des Druckgasbehälters 3 verbunden wird. Neben der Abblasleitung 14 bzw. ihrer Öffnung im zweiten Grundkörperabschnitt 5.2 des Tankventils 4 liegt eine in den Figuren mit 15 bezeichnete Gewindebohrung, welche zur Aufnahme einer Schraube geeignet ist. Hier kann eine sogenannte Abblasleitung bzw. Venting Tube einfach und zuverlässig angeschraubt werden, beispielsweise in der Art, wie es in der deutschen Patentanmeldung DE 10 2013 015 515 A1 der Anmelderin beschrieben ist.

Als weitere Funktionsuntergruppe im Bereich des zweiten Grundkörperabschnitts 5.2 ist in der Darstellung der Figur 2 ein Gasanschluss 16 zu erkennen. Dieser Gasanschluss 16 dient zur Entnahme von Gas aus dem Druckgasbehälter 3 über das Pilotventil 9 und zur Betankung des Druckgasbehälters 3. Er kann außerdem einen später noch näher beschriebenen Filter 17 aufweisen. Ein weiteres in der Darstellung der Figur 2 erkennbares Element im Bereich des zweiten Grundkörperabschnitts 5.2 bzw. im Bereich der elektromagnetischen Spule 10 ist dabei ein mit 18 bezeichneter Steckanschluss, über welchen einerseits die elektromagnetische Spule 10 und damit das Pilotventil 9 und andererseits Messdaten, beispielsweise die eines mit 19 bezeichneten Temperatursensors, übertragen werden können. Insbesondere weist das Tankventil 4 dabei den elektrischen Steckanschluss 18 als einzigen elektrischen Anschluss auf, sodass die Verkabelung der Speichervorrichtung 2 entsprechend einfach und effizient zu gestalten ist.

Neben dem Temperatursensor 19 ist im Bereich des ersten Grundkörperabschnitts 5.1 außerdem ein auf diesem in Richtung des Inneren des Druckgasbehälters 3 montierter leicht gebogener Rohrabschnitt 21 zu erkennen. Seine Ausgestaltung ist dabei so gewählt, dass er das einströmende Gas bei der Betankung des Druckgasbehälters 3 möglichst so in den Druckgasbehälter 3 verteilt, dass es zu einer Durchmischung des Gases und damit einer zuverlässigen Messung der Temperatur durch den Temperatursensor 19 kommt. Eine Austrittsöffnung 42 des gebogenen Rohrabschnitts 21 ist dabei idealerweise gegenüber dessen Nenndurchmesser im Strömungsquerschnitt verengt, um eine Strahlbildung des einströmenden Gases zu unterstützen und damit die Vermischung des Gases im Inneren des Druckgasbehälters 3 weiter zu verbessern.

Auf dem ersten Grundkörperabschnitt 5.1 ist in der Darstellung der Figur 2 außerdem ein mit 43 bezeichnetes Bauteil zu erkennen, welches aus mehreren Einzelteilen montiert aufgebaut ist. Dieses Bauteil 43, welches nachfolgend auch als Zusammenbaufilter 43 bezeichnet werden wird, umfasst einen Filter 20 sowie eine Rohrbruchsicherung 22 und ein Rückschlagventil 26, auf welche später noch näher eingegangen wird. Eine detaillierte Darstellung des Zusammenbaufilters 43 findet sich außerdem in der später noch diskutierten Figur 4. Weitere Funktionsuntergruppen können dabei auch im Inneren des ersten Grundkörperabschnitts 5.1 integriert ausgeführt sein.

In der Darstellung der Figur 3 ist in einem pneumatischen Fließbild schematisch der für die Erfindung relevante Teil des Tankventils 4 nochmals dargestellt. Das Tankventil 4 besteht wiederum aus dem mit 5 bezeichneten Grundkörper, welcher sich in die beiden Grundkörperabschnitte 5.1 und 5.2 aufteilt. Zur Betankung und zur Entnahme von Gas lässt sich das Tankventil 4 über den Gasanschluss 16, wie er in Figur 2 zu erkennen war, an ein Leitungssystem anschließen, welches den mit dem Tankventil 4 ausgestatteten Druckgasbehälter mit einer Betankungsleitung und einem Verbraucher und/oder weiteren Druckgasbehältern 3 der Speichervorrichtung 2 verbinden.

An den Gasanschluss 16 schließt sich der Filter 17 an. Er ist über einen Leitungsabschnitt 30 in dem Grundkörper 5 weitergeführt und verzweigt sich dann in eine Betankungsleitung 24 und eine Entnahmeleitung 25. Beide Leitungen haben dabei denselben durchströmbaren Querschnitt. Dies macht insbesondere die Fertigung der typischerweise in dem Grundkörper 5 gebohrten Leitungselemente 24, 25 besonders einfach. Die Betankungsleitung 24 führt zu dem bereits angesprochenen Rohrabschnitt 21 und weist ein Rückschlagventil 23 auf. Dieses Rückschlagventil 23 wird gegen die Kraft eines Federelements 27 beim Betankungsvorgang aufgedrückt, sodass das Gas bei der Betankung über den Rohrabschnitt 21 in den Druckgasbehälter 3 einströmen kann. Die Einströmung wird durch den Rohrabschnitt 21 dabei, wie es bereits erwähnt worden ist, an dem Temperatursensor 19 vorbeigeleitet, sodass dieser die Temperatur des sich in dem Druckgasbehälter 3 bildendenden Gasgemischs und nicht die Temperatur des unmittelbar einströmenden Gases misst.

Die Entnahmeleitung 25 verläuft ebenfalls durch den Grundkörper 5 und endet im Bereich des Zusammenbaufilters 43, welcher in dem Entnahmepfad im Bereich der Verbindung der Entnahmeleitung 25 mit dem Inneren des Druckgasbehälters 3 angeordnet ist, wie es auch in der Darstellung der Figur 2 zu erkennen ist. Die Entnahmeleitung 25, welche als der in dem Grundkörper 5 verlaufende Teil des Entnahmepfads nach der Verzweigung des Leitungsabschnitts 30 ausgebildet ist, weist als Entnahmeventil 9 das Pilotventil 9 auf, welches beispielsweise in der in der oben genannten deutschen Anmeldung zitierten Art und Weise funktioniert. Darüber hinaus ist in dem Entnahmepfad ein weiteres Rückschlagventil 26 vorgesehen.

Das Rückschlagventil 26 weist dabei einen Ventilkörper 28 sowie einen Ventilsitz 29 auf. Der Ventilkörper 28 ist über ein Federelement 31 immer dann, wenn der Druckgasbehälter 2 nicht betankt wird, von dem Ventilsitz 29 abgehoben. Dies führt dazu, dass bei der Entnahme von Gas über das Pilotventil 9 als Entnahmeventil 9 der Strömungsweg durch die Kraft des Federelements 31 unterstützend freigegeben wird. Bei der umgekehrten Strömungsrichtung, also wenn aufgrund einer Betankung des Druckgasbehälters 3 über den Gasanschluss 16 Druck an dem Rückschlagventil 26 anliegt, dann wird dieses von dem Überdruck entgegen der Kraft des Federelements 31 verschlossen, indem der Ventilkörper 28 auf den Ventilsitz 29 gedrückt wird. Dies ist sinnvoll und notwendig, da das Pilotventil 9 Gas bei höheren Druckdifferenzen von beispielsweise mehr als 5 bis 10 bar Differenzdruck durchlassen würde. Dies ist jedoch unerwünscht, da durch den hohen Volumenstrom einerseits eine Beeinträchtigung des Pilotventils 9 befürchtet werden muss, indem beispielsweise Dichtlippen oder ähnliches durch die Strömung beschädigt oder abgenutzt werden, und da andererseits Gas, welches über die Entnahmeleitung 25 in den Druckgasbehälter 3 strömt, im Bereich des Endes der Entnahmeleitung 25 in dem Grundkörperabschnitt 5.2 austreten würde. Das Gas würde dann unmittelbar in den Bereich des Temperatursensors 19 gelangen und würde hier die Temperaturwerte verfälschen, da dann primär die Temperatur des unmittelbar bei der Betankung in den Druckgasbehälter 3 eintretenden Gases gemessen wird. Dies gilt insbesondere dann, wenn der Zusammenbaufilter 43, anders als in Figur 2 dargestellt, nicht vorhanden ist. Das Rückschlagventil 26, die Rohrbruchsicherung 22 und der Filter 20 können auch ganz oder teilweise in den Grundkörper 5 bzw. den ersten Grundkörperabschnitt 5.2 integriert sein, wie es als teilweise Integration in der Darstellung der Figur 3 angedeutet ist. Für genau diesen Anwendungsfall kann eine Verfälschung des Temperaturwerts des Temperatursensors 19 auftreten. Bei der Verwendung des Zusammenbaufilters 43 kann diese voraussichtlich weitgehend ausgeschlossen werden. Dennoch ist aber eine Messung der Temperatur des in dem Tank befindlichen Gases erwünscht, insbesondere des Gases, welches über den Rohrabschnitt 21 einströmt und sich mit dem im Tank bereits befindlichen Restgas vermischt, sodass im Bereich des Temperatursensors 19 die gewünschte mittlere Temperatur des Gases gemessen werden kann.

In der Entnahmeleitung 25 - oder als Teil des Entnahmepfads auch auf den ersten Grundkörperabschnitt 5.1 in Richtung des Inneren des Druckgasbehälters 3 montiertbefindet sich die bereits angesprochene Rohrbruchsicherung 22, welche so auch in der Darstellung der Figur 2 zu erkennen ist. Die Rohrbruchsicherung 22 kann in beliebiger Art und Weise aufgebaut sein und ist grundlegend aus dem Bereich von Druckgasspeichern bekannt. Sie kann insbesondere so ausgestaltet sein, dass ein Ventilkörper 32 im normalen Betrieb bei ausgeglichenem Druck auf beiden Seiten des Ventilkörpers 32 über ein Federelement 34 von einem Ventilsitz 33 abgehoben wird. Kommt es zu einem Druckabfall auf der dem Druckgasbehälter 3 abgewandten Seite des Ventilkörpers 32, dann wird der Innendruck aus dem Druckgasbehälter den Ventilkörper 32 gegen die Kraft des Federelements 34 auf den Ventilsitz 33 pressen und damit die Entnahmeleitung 25 sicher und zuverlässig verschließen. Ein solches sicherheitsrelevantes Verschließen der Entnahmeleitung 25 tritt beispielsweise dann auf, wenn der zweite Grundkörperabschnitt 5.2 des Tankventils 4, beispielsweise bei einem Unfall, abgeschert wird. In diesem Fall kann über die Rohrbruchsicherung 22 das Ausströmen von Gas verhindert werden. Vergleichbares gilt beim Abreißen eines Leitungselements, beispielsweise nach dem Gasanschluss 16 oder an anderer Stelle in der Speichervorrichtung 2, was ebenfalls zu einem Absinken des Drucks in dem Entnahmepfad und damit zu einem Schließen der Rohrbruchsicherung 22 führt. Die Darstellung in Figur 3 zeigt dabei einen teilweise in den Grundkörper 5 integrierten Aufbau, bei welchem der Filter 20 und das Rückschlagventil 26 in den ersten Grundkörperabschnitt 5.1 integriert ausgeführt sind. Die Rohrbruchsicherung 22 ist in einem Teil des Entnahmepfads, welcher die Entnahmeleitung 25 in Richtung des Inneren des Druckgasbehälters 3 verlängert, auf dem Grundkörperabschnitt 5.1 aufmontiert. Genauso gut könnte die Rohrbruchsicherung 22 in dem Grundkörperabschnitt 5.1 integriert werden, oder sie könnte zusammen mit den anderen Bauteilen in der Art des bereits angesprochenen Zusammenbaufilters 43 so montiert werden, dass sowohl der Filter 20 als auch die Rohrbruchsicherung 22 und das Rückschlagventil 26 in dem Teil des Entnahmepfads liegen, welcher sich an die Entnahmeleitung 25 in Richtung des Inneren des Druckgasbehälters anschließt. Die Bauteile ragen dann in das Innere des Druckgasbehälters hinein. Dort sind sie auch im Falle eines Unfalls vergleichsweise sicher.

Die Rohrbruchsicherung 22 und das Rückschlagventil 26 sowie insbesondere auch das Rückschlagventil 23 können dabei aus den gleichen Bauteilen aufgebaut sein. Hierdurch lassen sich größere Mengen der gleichen Bauteile verwenden. Dies hat bei den Herstellungskosten dieser Bauteile entsprechende Vorteile und hilft so, die Kosten des Tankventils insgesamt zu senken.

In idealer Weise weist der Ventilkörper 32 oder der Ventilsitz 33, oder gegebenenfalls auch beide, wobei dies im Allgemeinen nicht notwendig ist, zusätzlich einen Strömungskanal mit einem definierten kleinen Querschnitt, beispielsweise in der Größenordnung von 200 µm Nenndurchmesser, auf. Dieser kann beispielsweise durch eine Bohrung oder eine Nut realisiert werden. Durch diesen Strömungskanal kommt es für den Fall, dass die Rohrbruchsicherung 22 aufgrund einer Druckschwankung unerwünscht angesprochen hat, zu einem Druckausgleich zwischen den beiden Seiten des Ventilkörpers 32 der Rohrbruchsicherung 22, sodass diese in ihren gewünschten Ursprungszustand, bei welchem das Federelement 34 den Ventilkörper 32 vom Ventilsitz 33 abhebt, zurückkehrt, sobald der Druck nach einer längeren Zeit ausgeglichen ist. Dieser Strömungskanal wird auch als Reset-Kanal bezeichnet. Er ist dabei so klein, dass im Falle eines gebrochenen Rohrs die durch diesen Strömungskanal abströmende Gasmenge nicht sicherheitskritisch ist.

In der Darstellung der Figur 4 ist nun eine Schnittdarstellung des Zusammenbaufilters 43 zu erkennen. Dieser besteht im Wesentlichen aus einem Filtergehäuse 44, welches in seinem Inneren den Filter 20 zeigt. Dieses Filtergehäuse 44 ist dicht mit einer entsprechenden Bohrung in dem ersten Grundkörperabschnitt 5.1 verschraubt. Hier ist im Gewinde das dichte Verschrauben notwendig, um zu verhindern, dass Schmutz den Filter 20 im Bypass umgehen kann. Mit dem Filtergehäuse 44 verschraubt schließt sich an den Filter 20 das Rückschlagventil 26 an. Das Rückschlagventil 26 weist gemeinsam mit der Rohrbruchsicherung 22 die Ventilsitze 29, 33 auf, welche hier einstückig in dem aufgeschraubten die Rohrbruchsicherung 22 aufweisenden Element angeordnet sind. Idealerweise kann der Aufbau dabei so gestaltet sein, dass die Ventilsitze 29, 33 aus einem Kunststoffmaterial wie beispielsweise PEEK hergestellt sind. Die hier als Kolben ausgebildeten Ventilkörper 28, 32 können entsprechend aus einem metallischen Material, beispielsweise aus Stahl, hergestellt sein.

Der hier dargestellte beispielhafte Aufbau des Zusammenbaufilters 43 weist nun ein Gewinde zwischen dem Filtergehäuse 44 und dem Rückschlagventil 26 auf. In der Darstellung der Figur 4 ist dieses Gewinde mit dem Bezugszeichen 45 versehen. Ein weiteres Gewinde befindet sich zwischen dem Teil, welches die Ventilsitze 29, 33 aufweist und einem Gehäuse 46 des Rückschlagventils 26. Dieses Gewinde ist in der Darstellung der Figur 4 mit dem Bezugszeichen 47 bezeichnet. Nun ist es so, dass die beiden Gewinde 45, 47 jeweils einen Bypass zu der Rohrbruchsicherung 22 ausbilden, falls diese nicht gänzlich dicht abdichten. Genau dies kann in diesem hier vorliegenden Fall gewünscht sein. Der Eintrag von Partikel durch diesen Bypass ist unkritisch, da in der Richtung des abströmenden Gases der Filter 20 auf diese potenziellen Strömungswege durch die Gewinde 45, 47 folgt. Es kann daher gemäß einer vorteilhaften Ausgestaltung vorgesehen sein, dass zumindest eines dieser beiden Gewinde 45, 47 nicht mit einem Gewindedichtmittel versehen wird. Bei der Montage ergibt sich somit zwangsläufig eine minimale Leckage durch eines der Gewinde 45, 47, beispielsweise weil hier Metall auf Metall oder Metall auf Kunststoff aufliegt und keine vollständige Abdichtung zu erzielen ist. Diese Leckage über die Gewinde 45, 47, wobei diese sowohl bei einem als auch bei beiden Gewinden 45, 47 entsprechend auftreten kann, kann nun den bereits angesprochenen Strömungskanal als Reset-Kanal ersetzen, sodass in dem Aufbau des Rückschlagventils 26 und der Rohrbruchsicherung 22 kein eigener Strömungskanal vorgesehen werden muss. Dies ist ein erheblicher Vorteil hinsichtlich der Fertigung, da ein entsprechend kleiner Strömungskanal mit einem durchströmbaren Querschnitt von beispielsweise 200 µm entsprechend kompliziert in der Herstellung ist. Dennoch wäre sein Einbau im Bereich der Rohrbruchsicherung 22 auch hier prinzipiell denkbar.

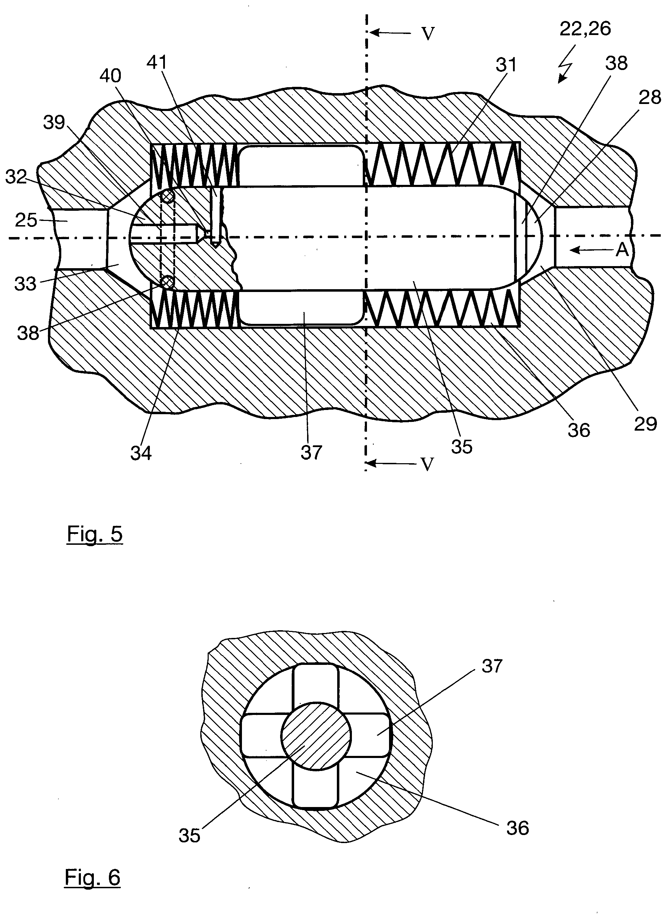

Neben der Verwendung von Gleichteilen mit Ausnahme der eingebrachten Reset-Bohrung beispielsweise in dem Ventilkörper 32 und dem lediglich umgekehrten Einbau dieser Teile einmal als Rückschlagventil 26 und einmal als Rohrbruchsicherung 22 ist es auch denkbar, die Rohrbruchsicherung 22 und das Rückschlagventil 26 in einem einzigen Aufbau zu realisieren. Ein solcher Aufbau ist beispielhaft in der Darstellung der Figuren 4 und 5 angedeutet. Die kombinierte Rohrbruchsicherung 22 und das Rückschlagventil 26 weisen dazu einen gemeinsamen Baukörper 35 auf, welcher im Wesentlichen zylindrisch ausgebildet ist und an seinen beiden Enden die Ventilkörper 28 und 32 trägt. Diese sind in der Darstellung der Figur 5 jeweils halbkugelförmig ausgebildet und sitzen an den Enden des gemeinsamen Baukörpers 35. Insbesondere sind sie einstückig mit diesem gemeinsamen Baukörper 35 ausgeführt. Den Baukörper 35 umschließt ein erweiterter Leitungsabschnitt 36, welcher einen etwas größeren Durchmesser als der gemeinsame Baukörper 35 hat, sodass im geöffneten Zustand der Rohrbruchsicherung 22 und des Rückschlagventils 26 das Gas um diesen gemeinsamen Baukörper 35 herumströmen kann. Er stützt sich dabei mit einzelnen Rippen 37, wie es insbesondere in der Schnittdarstellung in Figur 6 zu erkennen ist, an den Wandungen des erweiterten Leitungsabschnitts 36 ab und wird so geführt.

In der Darstellung der Figur 5 ist dabei die Strömungsrichtung bei der Entnahme von Gas durch einen mit A bezeichneten Pfeil im Bereich der Entnahmeleitung 25, von welcher der erweiterte Leitungsabschnitt 36 einen Teil ausbildet, angedeutet. Die beiden Federelemente 34 und 31 der Rohrbruchsicherung 22 bzw. des Rückschlagventils 26 stützen sich dabei ringförmig um den jeweiligen Ventilsitz 29 bzw. 33 herum an dem den erweiterten Leitungsabschnitt 36 umgebenden Material einerseits und an den Rippen 37 andererseits ab. Der Aufbau ist damit außerordentlich einfach und lässt sich effizient montieren, wenn, entgegen der prinzipmäßigen Darstellung in Figur 5, beispielsweise einer der Ventilsitze 29, 33 einschraubbar oder der Leitungsabschnitt 36 insgesamt teilbar und beispielsweise durch Verpressen oder Verschrauben montierbar ausgeführt ist. In der Darstellung der Figur 4 sind außerdem im Bereich des Ventilkörpers 28 ein Dichtelement 38 und im Bereich des Ventilkörpers 32 an dem gemeinsamen Baukörper 35 ein Dichtelement 38 zu erkennen. Diese Dichtelemente 38 verbessern die Anlage der Ventilkörper 32, 28 an den jeweiligen Ventilsitz 33, 29 und verbessern somit die Abdichtung.

Der Strömungskanal als Reset-Kanal ist in der Darstellung der Figur 5 rein beispielhaft durch Bohrungen im Bereich des Ventilkörpers 32 realisiert. Eine erste axiale Bohrung 39 verringert sich zu dem definierten durchströmbaren Querschnitt im Bereich einer mit 40 bezeichneten Bohrung mit einem Durchmesser von lediglich beispielsweise 150 µm. Diese mündet in eine radiale Bohrung 41 und ermöglicht so dem Gas ein Durchströmen des Ventils der Rohrbruchsicherung 22 auch für den Fall, dass der Ventilkörper 32 am Ventilsitz 33 dichtend anliegt. Die Bohrung 40 bildet in der Darstellung der Figur 5 somit den Strömungskanal mit definierten Querschnitt aus, um die Rohrbruchsicherung 22 gegebenenfalls nach einem fehlerhaften Ansprechen zurückzusetzen. Alternativ zu diesem Aufbau wäre selbstverständlich auch die Verwendung einer Nut beispielsweise im Ventilsitz 33 oder am Ventilkörper 32 denkbar. Insbesondere könnte, vor allem bei einer Abdichtung ohne das Dichtelement 38 im Bereich des Ventilsitzes 32 eine spiralförmige Nut, beispielsweise über einen Drehmeisel bei der Fertigung des gemeinsamen Körpers 35 im Bereich des Ventilkörpers 32, realisiert werden. Auch diese könnte einen entsprechenden Strömungskanal im vergleichbaren Sinne wie der durch die Bohrungen 39, 40, 41 ausgebildeten Strömungskanal mit der Begrenzung des Querschnitts durch die Bohrung 40 bilden. Als Alternative hierzu wäre eine ebenfalls spiralförmige Nut im Bereich des Ventilsitzes 33 denkbar. Auch eine axial verlaufende Nut sowohl im Ventilsitz 33 als auch im Ventilkörper 32 sind ebenso denkbar, diese sind in der Fertigung jedoch schwerer in der gewünschten Präzision herzustellen, als eine spiralförmige Nut. Auch ein Anbau des gesamten in der Darstellung der Figur 5 erkennbaren Aufbaus beispielsweise an dem Filter 20 direkt oder über ein Filtergehäuse 44, analog zur Darstellung in Figur 4, wäre denkbar. In diesem Fall könnte auch das Gewinde für eine solche Montage den Strömungskanal als Reset-Kanal bilden, wie es oben bei der Erläuterung zu den in Figur 4 mit 45 und 47 bezeichneten Gewinden erläutert worden ist.

Der Aufbau mit dem gemeinsamen Baukörper 35 ist besonders einfach und effizient, da er die Funktionalität von zwei Bauteilen in einem Bauteil vereint. Er kann insbesondere bei der Montage auf dem Tankventil analog zur Darstellung in Figur 2 so realisiert werden, dass ein Teil des erweiterten Leitungsabschnitts 36 in den ersten Grundkörperabschnitt 5.1 des Grundkörpers 5 eingebracht ist und der andere Teil des erweiterten Leitungsabschnitts 36 durch ein aufgeschraubtes Element, wie es in der Darstellung der Figur 2 prinzipmäßig zu erkennen ist, realisiert wird, wobei dieses Element dann zusätzlich den Filter 20 umfassen kann.

## Patentansprüche

1. Tankventil (4) zur Montage an einem Druckgasbehälter (3), mit einem Grundkörper (5), mit einem gemeinsamen Gasanschluss (16) zur Betankung/Entnahme, welcher sich innerhalb des Grundkörpers (5) in eine Betankungsleitung (24) und eine Entnahmeleitung (25) als Teil eines Entnahmepfades aufteilt, und mit einem Entnahmeventil (9) in der Entnahmeleitung (25), wobei in dem Entnahmepfad in Reihe zu dem Entnahmeventil (9) ein Rückschlagventil (26) angeordnet ist, welches den Durchfluss entgegen der Strömungsrichtung (A) bei der Entnahme von Gas sperrt, und wobei in dem Entnahmepfad eine Rohrbruchsicherung (22) angeordnet ist und ein Ventilkörper (28, 32) des Rückschlagventils (26) und/oder der Rohrbruchsicherung (22) im Normalbetrieb mit einem Federelement (31, 34) von seinem Ventilsitz (29, 33) abgehoben ist,
**dadurch gekennzeichnet, dass**
die Ventilkörper (28, 32) des Rückschlagventils (26) und der Rohrbruchsicherung (22) einteilig mit einem gemeinsamen Körper (35) ausgeführt sind.

2. Tankventil (4) nach Anspruch 1,
**dadurch gekennzeichnet, dass**
das Rückschlagventil (26) in der Entnahmeleitung (25) und die Rohrbruchsicherung (22) aus den gleichen Bauteilen (28, 29, 31, 32, 33, 34) in umgekehrter Einbaurichtung ausgebildet sind.

3. Tankventil (4) nach Anspruch 2,
**dadurch gekennzeichnet, dass**
ein Rückschlagventil (23) in der Betankungsleitung (24) ebenfalls aus den gleichen Bauteilen wie das Rückschlagventil (26) in der Entnahmeleitung (25) und die Rohrbruchsicherung (22) ausgebildet ist.

4. Tankventil (4) nach einem der Ansprüche 1 bis 3,
**dadurch gekennzeichnet, dass**
der Ventilkörper (32) und/oder der Ventilsitz (33) der Rohrbruchsicherung (22) einen Strömungskanal mit definiertem Querschnitt aufweist, welcher die Hochdruckseite auch im geschlossenen Zustand mit der Niederdruckseite verbindet.

5. Tankventil (4) nach Anspruch 4,
**dadurch gekennzeichnet, dass**
der Strömungskanal durch Bohrungen (39, 40, 41) in dem Ventilkörper (32) ausgebildet ist.

6. Tankventil (4) nach Anspruch 4
**dadurch gekennzeichnet, dass**
der Strömungskanal als gerade oder bevorzugt spiralförmig umlaufende Nut in dem Ventilkörper (32) und/oder Ventilsitz (33) ausgebildet ist.

7. Tankventil (4) nach Anspruch 4,
**dadurch gekennzeichnet, dass**
der Strömungskanal durch die Leckage eines Gewindes (45, 47) ausgebildet ist.

8. Tankventil (4) nach einem der Ansprüche 1 bis 7,
**dadurch gekennzeichnet, dass**
der Entnahmepfad ferner einen Filter (20) aufweist, welcher zwischen dem Entnahmeventil (9) einerseits und dem Rückschlagventil (26) sowie der Rohrbruchsicherung (22) andererseits angeordnet ist.

9. Tankventil (4) nach Anspruch 8,
**dadurch gekennzeichnet, dass**
der Filter (20), das Rückschlagventil (26) und die Rohrbruchsicherung (22) zu einem Bauteil (43) montiert sind.

10. Tankventil (4) nach Anspruch 9,
**dadurch gekennzeichnet, dass**
das Bauteil (43) sich in dem Entnahmepfad in Richtung des Inneren des Druckgasbehälters (3) an die Entnahmeleitung (25) anschließt.

11. Tankventil (4) nach einem der Ansprüche 1 bis 10,
**dadurch gekennzeichnet, dass**
die Entnahmeleitung (25) und die Betankungsleitung (24) den selben durchströmbaren Nenndurchmesser ihrer Leitungselemente aufweisen.

12. Verwendung eines Tankventils (4) nach einem der Ansprüche 1 bis 11,
an einem Druckgasbehälter (3) zur Speicherung von Wasserstoff oder Erdgas, insbesondere bei einem Nenndruck von mehr als 65 MPa, als Brennstoff in einem Fahrzeug (1).

## Claims

1. A tank valve (4) for mounting on a compressed gas container (3), with a base body (5), with a common gas connection (16) for refueling/extraction, which is divided within the base body (5) into a refueling line (24) and an extraction line (25) as part of an extraction path, and with an extraction valve (9) in the extraction line (25), a check valve (26) being arranged in the extraction path in series with the extraction valve (9), which check valve blocks the flow against the flow direction (A) when gas is extracted,
and wherein a pipe rupture protection (22) is arranged in the extraction path and a valve body (28, 32) of the check valve (26) and/or the pipe rupture protection (22) is lifted off its valve seat (29, 33) in normal operation with a spring element (31, 34),
**characterized in that**
the valve bodies (28, 32) of the check valve (26) and the pipe rupture protection (22) are made in one piece with a common body (35).

2. The tank valve (4) according to claim 1,
**characterized in that**
the check valve (26) in the extraction line (25) and the pipe rupture protection (22) are made from the same components (28, 29, 31, 32, 33, 34) in the reverse installation direction.

3. The tank valve (4) according to claim 2,
**characterized in that**
a check valve (23) in the refueling line (24) is also made from the same components as the check valve (26) in the extraction line (25) and the pipe rupture protection (22).

4. The tank valve (4) according to any one of claims 1 to 3,
**characterized in that**
the valve body (32) and/or the valve seat (33) of the pipe rupture protection (22) has a flow channel with a defined cross section, which connects the high pressure side to the low pressure side even in the closed state.

5. The tank valve (4) according to claim 4,
**characterized in that**
the flow channel is formed by bores (39, 40, 41) in the valve body (32).

6. The tank valve (4) according to claim 2,
**characterized in that**
the flow channel is formed as a straight or preferably spiral-shaped groove in the valve body (32) and/or the valve seat (33).

7. The tank valve (4) according to claim 4,
**characterized in that**
the flow channel is formed by the leakage of a thread (45, 47).

8. The tank valve (4) according to any one of claims 1 to 7,
**characterized in that**
the extraction path further has a filter (20) which is arranged between the extraction valve (9), on the one hand, and the check valve (26) and the pipe rupture protection (22), on the other hand.

9. The tank valve (4) according to claim 8,
**characterized in that**
the filter (20), the check valve (26) and the pipe rupture protection (22) are mounted into one component (43).

10. The tank valve (4) according to claim 9,
**characterized in that**
the component (43) connects to the extraction line (25) in the extraction path in the direction of the interior of the compressed gas container (3).

11. The tank valve (4) according to any one of claims 1 to 10,
**characterized in that**
the extraction line (25) and the refueling line (24) have the same nominal diameter of their line elements that can be flowed through.

12. Use of a tank valve (4) according to any one of claims 1 to 11, on a compressed gas container (3) for storing hydrogen or natural gas, in particular at a nominal pressure of more than 65 MPa, as fuel in a vehicle (1).

## Revendications

1. Soupape de réservoir (4) destinée à être montée sur un contenant de gaz comprimé (3), avec un corps de base (5), avec un raccord de gaz (16) commun destiné au ravitaillement/au prélèvement, lequel se divise à l'intérieur du corps de base (5) en une conduite de ravitaillement (24) et en une conduite de prélèvement (25) en tant que partie d'un chemin de prélèvement, et avec une soupape de prélèvement (9) dans la conduite de prélèvement (25), dans laquelle est disposée, sur le chemin de prélèvement, en série avec la soupape de prélèvement (9), une soupape anti-retour (26), laquelle bloque l'écoulement traversant dans le sens opposé à la direction d'écoulement (A) lors du prélèvement de gaz,
et dans laquelle
un système de sécurité anti-rupture de tuyau (22) est disposé sur le chemin de prélèvement et un corps de soupape (28, 32) de la soupape anti-retour (26) et/ou du système de sécurité anti-rupture de tuyau (22) est relevé de son siège de soupape (29, 33) avec un élément de ressort (31, 34) dans le fonctionnement normal,
**caractérisée en ce que**
les corps de soupape (28, 32) de la soupape anti-retour (26) et du système de sécurité anti-rupture de tuyau (22) sont réalisés en une partie avec un corps (35) commun.

2. Soupape de réservoir (4) selon la revendication 1, **caractérisée en ce que**
la soupape anti-retour (26) dans la conduite de prélèvement (25) et le système de sécurité anti-rupture de tuyau (22) sont réalisés à partir des mêmes composants (28, 29, 31, 32, 33, 34) dans une direction de montage inversée.

3. Soupape de réservoir (4) selon la revendication 2, **caractérisée en ce que**
une soupape anti-retour (23) dans la conduite de ravitaillement (24) est également réalisée à partir des mêmes composants que la soupape anti-retour (26) dans la conduite de prélèvement (25) et que le système de sécurité anti-rupture de tuyau (22).

4. Soupape de réservoir (4) selon l'une quelconque des revendications 1 à 3,
**caractérisée en ce que**
le corps de soupape (32) et/ou le siège de soupape (33) du système de sécurité anti-rupture de tuyau (22) relient un canal d'écoulement à une section transversale définie, laquelle relie le côté haute pression au côté basse pression également dans l'état fermé.

5. Soupape de réservoir (4) selon la revendication 4, **caractérisée en ce que**
le canal d'écoulement est réalisé par des alésages (39, 40, 41) dans le corps de soupape (32).

6. Soupape de réservoir (4) selon la revendication 4, **caractérisée en ce que**
le canal d'écoulement est réalisé en tant qu'une rainure droite ou s'étendant en périphérie de manière préférée en forme de spirale dans le corps de soupape (32) et/ou dans le siège de soupape (33).

7. Soupape de réservoir (4) selon la revendication 4, **caractérisée en ce que**
le canal d'écoulement est réalisé par la fuite d'un filetage (45, 47).

8. Soupape de réservoir (4) selon l'une quelconque des revendications 1 à 7,
**caractérisée en ce que**
le chemin de prélèvement présente en outre un filtre (20), lequel est disposé entre la soupape de prélèvement (9) d'une part et la soupape anti-retour (26) ainsi que le système de sécurité anti-rupture de tuyau (22) d'autre part.

9. Soupape de réservoir (4) selon la revendication 8, **caractérisée en ce que**
le filtre (20), la soupape anti-retour (26) et le système de sécurité anti-rupture de tuyau (22) sont montés en un composant (43).

10. Soupape de réservoir (4) selon la revendication 9, **caractérisée en ce que**
le composant (43) se connecte à la conduite de prélèvement (25) dans le chemin de prélèvement en direction de l'intérieur du contenant de gaz comprimé (3).

11. Soupape de réservoir (4) selon l'une quelconque de revendications 1 à 10,
**caractérisée en ce que**
la conduite de prélèvement (25) et la conduite d'approvisionnement (24) présentent le même diamètre nominal pouvant être traversé de leurs éléments de conduite.

12. Utilisation d'une soupape de réservoir (4) selon l'une quelconque des revendications 1 à 11,
sur un contenant de gaz comprimé (3) pour stocker de l'hydrogène ou du gaz naturel, en particulier à une pression nominale supérieure à 65 MPa, en tant que combustible dans un véhicule (1).
